# EUROPEAN PATENT SPECIFICATION

(11) **EP 1 919 051 B1**
(45) Date of publication and mention of the grant of the patent: **27.11.2013**
(21) Application number: 07119633.1
(22) Date of filing: 30.10.2007
(51) Int. Cl.: H02G 3/08

(54) **A junction box for electrical installations**
Verteilerkasten für elektrische Installationen
Boîtier de raccordement pour installations électriques

(30) Priority: 02.11.2006 SE 0602314
(43) Date of publication of application: 07.05.2008
(73) Proprietor: Thorsman & Co. AB, 611 29 Nyköping (SE)
(72) Inventor: Svensson, Leif, 610 54 Nävekvarn (SE)
(74) Representative: Karlsson, Leif Karl Gunnar

(56) References cited:
- WO-A1-88/01447

## Description

### Field of the invention

The present invention relates to the field of electrical installations and then in particular to apparatus boxes, junction boxes, junction boxes fitted in living quarters and in ceilings. As such junction boxes are fitted in floors, walls and ceilings for connection, via electrical connections, to cable conduits in which electrical cables for both strong current and weak current are carried to the junction box and there connected to different consumer-dependent interfaces.

### Background of the invention

Such junction boxes belong to conventional technology and are frequently installed primarily in all new buildings. There exist a large number of such types of junction boxes, depending on the type of user and user combinations. The junction boxes are equipped with everything from one to ten electrical connections all of which have a circular cylindrical shape to an extended cylindrical shape, i.e. have a rounded rectangular base surface. Each junction box is adapted to enable an insert to be installed in the box, wherein the form of insert depends on its function. The external form of the insert and the insert-fitting means are adapted to the internal form of the junction box and to its mounting means, e.g. in the form of a number of screw pillars. Because of the large number of different types of junction boxes that exist, it is necessary for the person installing the junction boxes to have at his disposal connectors, inserts and covers to all of these boxes, meaning that he must have a considerable stock and also a considerable amount of time for preparing for each working occasion.

Document WO 88/01447 A1 discloses a junction base for electrical installations according to the preamble of claim 1.

### Object of the invention

The object of the present invention is to provide a module system for such a junction box which will enable one and the same box to be used for several types and combinations of insert, therewith facilitating storage of the junction boxes and junction box selection. This allows the person installing the junction boxes to manage all installations at a given time with far fewer junction boxes and junction-box connections.

### Summary of the invention

This object of the invention is achieved by the invention defined in the independent claim. Suitable embodiments of the invention are set forth in the dependent claims.

The present invention relates to a junction box for electrical installations. The junction box includes a bottom and a wall which is firmly connected to said bottom and extends perpendicularly thereto and has a free edge. The wall includes at its bottom at least one pipe socket to which a conduit for carrying electric cables can be connected. The junction box also includes an opening formed by said wall at its free edge, wherein the opening can be closed partially with the aid of a lid. The lid is connected to a collar which can be removed from the box and which includes an opening, wherein one edge of the collar is spaced from the free edge of the box while the other edge of the collar connects with the free edge of the box.

The lid is according to another embodiment provided as a spacing lid which is firmly connected to the collar.

According to another embodiment of the invention the spacing lid is firmly connected to the collar in combination with a covering lid and is designed to cover a part of the opening between the free edge of the box and the collar or to cover a part of this opening.

According to one embodiment of the invention the collar includes an internally positioned mounting ring provided with mounting elements.

According to one embodiment, the mounting ring can be rotated in relation to the collar,

According to another embodiment of the invention, the box is configured so that the surrounding wall will include from one to four adaptations to each of which there can be connected a pipe connection or a coupling element.

The bottom surface of the box and its opening may be shaped geometrically, such as in the shape of a rectangle whose two opposing sides have a semi circular shape.

In other embodiments of the invention, the collar may have essentially the shape of a straight circular cylinder.

Alternatively, the collar can have essentially the shape of a straight cylinder whose base surface has the geometrical shape of a rectangle whose two mutually opposing sides are semi-circular.

According to another embodiment of the box the spacing lid is designed to cover the part-opening completely between one side of the box-mounted collar and said wall.

According to another embodiment of the box, the spacing lid is designed to cover one of two mutually opposite sides of mutually identical part-openings of the collar.

According to another embodiment of the box, the box has mounted therein at least two collars, wherein the spacing lid is designed to cover fully an opening between the two box-mounted collars and said wall.

According to another embodiment of the box, a second spacing lid is designed to cover one of two or more openings located on mutual sides of the collars.

### Brief description of the drawings

The invention will now be described in more detail with reference to an embodiment illustrated in the accompanying drawings, wherein
Fig. 1 illustrates in perspective a conventional double-box provided with a lid;
Fig. 2 illustrates schematically in figures a) - i) nine embodiments of the present invention;
Fig. 3 illustrates an embodiment of the invention according to figure 2a;
Fig. 4 illustrates an embodiment of the invention according to figure 2h;
Fig. 5 illustrates an embodiment of the invention according to figure 2e; and
Fig. 6 illustrates a further embodiment according to the present invention.

### Description of the invention

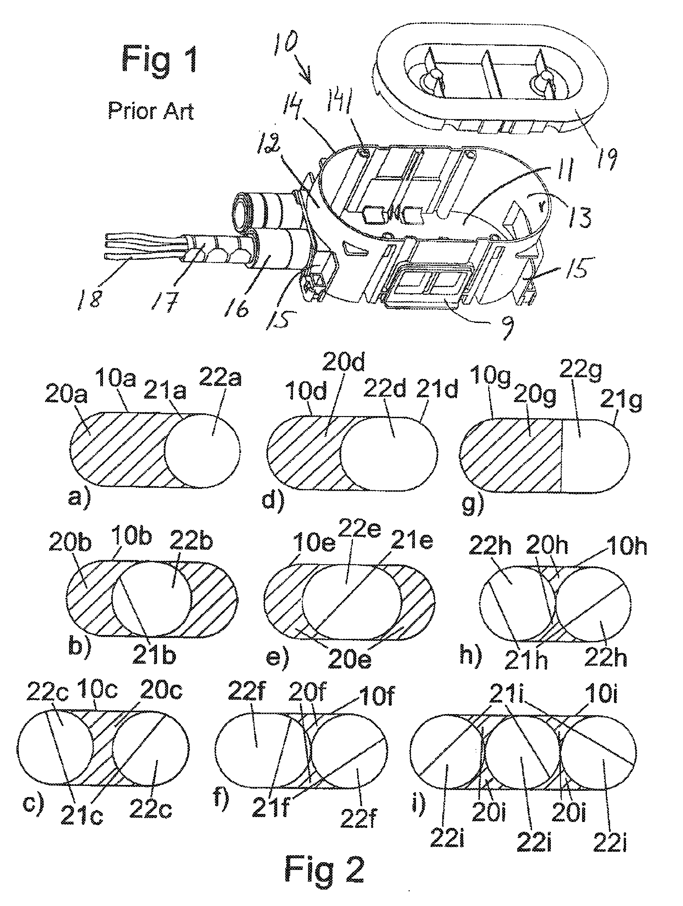

Figure 1 illustrates a conventional double-box 10 which includes a bottom 11 and a wall 12 which is firmly connected perpendicularly around the bottom, said wall and said bottom together forming a bottom part of the box. The bottom and the wall together define a space that includes an opening 13 delimited by a free edge 14. Although not shown, one or more inserts can be inserted in the box and secured therein with the aid of screws in the screw tower 141 intended to this end, wherein the tower shields these screws from contact with the electrical content of the box. The wall of the box also includes adaptations 15 in which coupling elements 9 for mutually coupling two boxes or different types of connectors 16, such as simple connectors, double connectors, triple connectors and branch connectors can be snapped. The connectors 16 are designed to enable a cable conduit 17 to be mounted on the connectors with a press fitting. The cable conduit 17 house electrical cables 18. The double box 10 is also provided with a covering lid 19 which is intended to cover the entire opening 13 of the box.

Figure 2 illustrates a number of embodiments of a module system of a junction box for electrical installations in accordance with the present invention. All figures illustrate diagrammatically a module junction box 10a -10i with one or more collars 21 a-21 i fitted to the junction box. Each collar is fitted to the junction box such that one edge of the collar connects with the free edge 14 of the box. The other edge of the collar is therewith spaced from the free edge of the box, this spacing normally corresponding to the thickness of a wall surface behind which the box is fitted. A lid is fitted to each collar, either by a snap-on action or is permanently attached. The lid is either designed as a spacing lid, shown in broken lines in figure 2, connected to one side of the collar, or as a covering lid, which can be represented by the openings 22a-22i in the absence of lines in figure 2, connected to the collar at a distance from its edge spaced from the free edge of the box. The term lid also includes a combination of distance lid and covering lid as will be evident from the following text.

As illustrated diagrammatically with oblique lines in the figures, there is provided a spacing lid 20a-20i for each combination of box and collar. All spacing lids 20a-20i illustrated in figure 2 are designed to fill out one or more part-openings in the interspace between the surrounding wall of the module box or the collar or collars 21 mounted in the module box. As will be evident from the figures, the spacing lid obtains different forms depending on the size and shape of the module box and the form of the collar 21 mounted in the box. A common feature for all embodiments shown in figure 2, however, is that each spacing lid 20a-20i fills out the entire space between the surrounding wall and the collar mounted in the box. Moreover, the spacing lid of each box is connected to the collar of respective boxes either with the aid of a snap-on action or by being permanently attached to the collar.

Each of the embodiments illustrated in figure 2 also defines through the medium of the collar one or more insert openings 22a-22i in which appropriate inserts can be fitted. As indicated above, each insert opening 22a-22i can be covered by a covering lid which is connected to the collar either by a snap-on action or by being permanently attached to the collar.

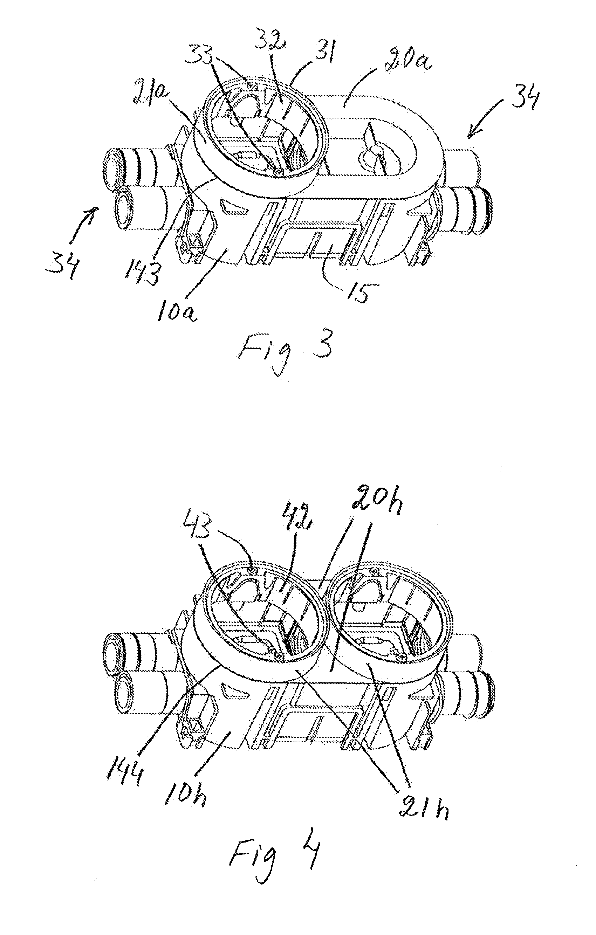

Figure 3 illustrates a complete box 10a according to figure 2a, wherein the box 10a includes a circular-cylindrical collar 21a to which there is connected a spacing cover 20a. The collar is provided internally at its, in spaced relationship with the free edge 143 of the box, edge 31 which includes a mounting ring 32 that is rotatably fitted to the collar. The mounting ring 32 is also provided with two mounting screws 33 located diametrically in the collar for selective fitting of an insert. The bottom part of the illustrated box includes conventionally double connectors 34 at both ends, to which connectors cable conduits can be fitted and through which electric cables can be drawn. Moreover, the bottom part is shown to include at least one further adaptation 15 for an additional double connector for instance.

Figure 4 illustrates a complete box 10h according to figure 2h. This embodiment includes two circular-cylindrical collars 21 h to which two spacing lids 20h are fitted so as to cover the three-sided openings defined between the free edges 144 of the box and each collar 21 h. Corresponding to the figure 3 illustration, each collar includes a mounting ring 42, rotatably mounted in the collar. Each mounting ring 42 also includes in this embodiment of the collar two diametrically situated mounting screws 43 for mounting selectively appropriate inserts.

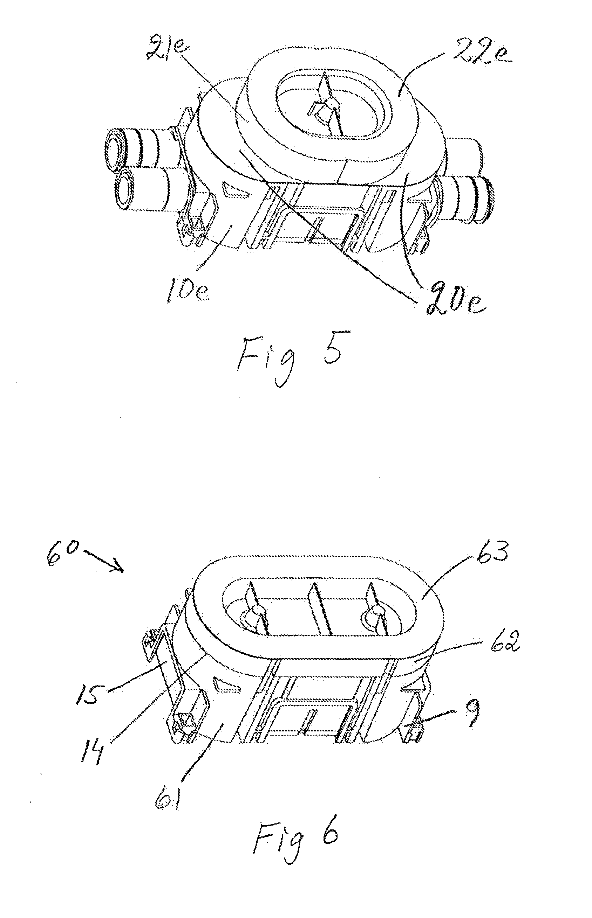

Figure 5 illustrates a further complete box 10e according to the present invention, said box corresponding to the schematic figure 2e. The box includes two spacing lids 20e which are connected to a raised collar 21e of an "extended" circular-cylindrical shape situated centrally in the box. The collar opening is covered by a covering lid 22e. Elements for mounting suitable inserts are provided beneath the covering lid 22e in a manner corresponding to that illustrated in figures 3 and 4. In case the mounting elements are identical to those shown in figure 3 an embodiment corresponding to that indicated in figure 2b is obtained. The collar 21e enables the planar surface of the covering lid to be flushed with, e.g., a wall element behind which the box is fitted. In other respects, the bottom part of the box according to figure 5 is equipped as the bottom parts according to figures 1, 3 and 4, in other words in a conventional manner.

Figure 6 illustrates an example of a junction box 60 for electrical installations, wherewith the bottom part 61 of the box has a similar design to the bottom parts illustrated in figure 1, 3, 4 and 5, i.e. with the possibility of to the bottom part snapping for example double connectors to adaptations 15 with coupling elements 9 in a conventional manner. As shown in respect of other embodiments, a collar 62 is connected correspondingly to the free edge 14 of the junction box this collar being connected to a covering lid 63 which is secured to the collar through the medium of a snap-on action. Similar to the embodiment illustrated in figure 6, the lid is comprised solely of the covering lid 63, although this embodiment can also be modified such as to replace the illustrated covering lid 63 with a spacing lid according to figure 3 firmly connected to the collar 62 in combination with the mounting element in the collar 62 for an appropriate insert. The mounting elements may have the configuration of those illustrated in figures 3 and 4.

As will be evident from the embodiments described, the bottom part of the junction box in combination with collar, spacing lid and covering lid form in various embodiments a module system for a junction box for electrical installations. This enables one and the same bottom part to be used by a fitter as a solution to a plurality of varying installation problems. This reduces the number of different types of bottom parts required to be stored by an installer and requires only one bottom part with each installation.

## Claims

1. A junction box (10, 60) for electrical installations, such as an apparatus box or a coupling box, wherein the box includes a bottom (11) and a surrounding perpendicular wall (12) which is securely fitted to said bottom and which includes a free edge (14, 143, 144), said wall (12) being connected to at least one pipe connection (16, 34) to which a connection conduit (17) for receiving electrical conductors (18) can be connected, and wherein the junction box (10) includes an opening (13) defined by said wall (12) at said free edge (14, 143, 144), **characterized in that** the opening can be closed partially with the aid of a lid (20) and that the lid is connected to a collar (21) that includes an opening and that can be released from the junction box, wherein one edge of the collar is spaced from the free edge (14) of the junction box while the other edge of the collar (21) connects with the free edge (14) of the junction box.

2. A junction box according to claim 1, **characterized in that** the lid is configured as a spacing lid (20) which is firmly connected to the collar (21).

3. A junction box according to claim 2, **characterized in that** the spacing lid (20) is designed to cover a part or the whole of the opening between the free edge (14) and the collar (21).

4. A junction box according to any one of claims 1-3, **characterized in that** the collar (21) includes an internally positioned mounting ring (32, 42) provided with mounting screws (33) for fitting a selective insert to the box.

5. A junction box according to claim 4, **characterized in that** the mounting ring (32, 42) is rotatable in relation to the collar (21).

6. A junction box according to any one of claims 1-5, **characterized in that** the surrounding wall (12) includes from one to four adaptations (15) to each of which there can be connected either a pipe connection (16) or a coupling element (9) can be fitted for joining two boxes together.

7. A junction box according to any one of claims 1-6, **characterized in that** the bottom surface and the opening (13) are geometrically configured generally in the form of a rectangle whose two opposing sides are semi-circular in shape.

8. A junction box according to any one of claims 1-7, **characterized in that** the collar (21) is generally in the form of a straight circular cylinder.

9. A junction box according to any one of claims 1-7, **characterized in that** the collar (21) generally has the form of a straight cylinder whose base surface has the geometrical form of a rectangle whose two mutually opposing sides are semi-circular in shape.

10. A junction box according to any one of claim 2-9, **characterized in that** the box has mounted thereon at least two collars (21), wherein the spacing lid (20) is designed to cover completely an opening between the two collars (21) mounted in the box (10) and the wall (12).

## Patentansprüche

1. Verbindungsdose (10, 60) für elektrische Installationen, wie zum Beispiel eine Gerätedose oder eine Kupplungsdose, wobei die Dose einen Boden (11) und eine umgebende senkrechte Wand (12) enthält, die fest an dem Boden angebracht ist und die einen freien Rand (14, 143, 144) enthält, wobei die Wand (12) mit mindestens einem Rohrstutzen (16, 34) verbunden ist, mit dem ein Anschlusskanal (17) zur Aufnahme elektrischer Leiter (18) verbunden werden kann, und wobei die Verbindungsdose (10) eine durch die Wand (12) an dem freien Rand (14, 143, 144) definierte Öffnung (13) enthält, **dadurch gekennzeichnet, dass** die Öffnung mit Hilfe eines Deckels (20) teilweise verschlossen werden kann und dass der Deckel mit einem Kragen (21) verbunden ist, der eine Öffnung enthält und der von der Verbindungsdose gelöst werden kann, wobei ein Rand des Kragens von dem freien Rand (14) der Verbindungsdose beabstandet ist, während der andere Rand des Kragens (21) mit dem freien Rand (14) der Verbindungsdose verbunden wird.

2. Verbindungsdose nach Anspruch 1, **dadurch gekennzeichnet, dass** der Deckel als ein Abstandsdeckel (20) konfiguriert ist, der mit dem Kragen (21) fest verbunden ist.

3. Verbindungsdose nach Anspruch 2, **dadurch gekennzeichnet, dass** der Abstandsdeckel (20) dazu ausgeführt ist, einen Teil der oder die gesamte Öffnung zwischen dem freien Rand (14) und dem Kragen (21) zu bedecken.

4. Verbindungsdose nach einem der Ansprüche 1 - 3, **dadurch gekennzeichnet, dass** der Kragen (21) einen innen positionierten Montagering (32, 42) enthält, der mit Montageschrauben (33) zum Anbringen eines ausgewählten Einsatzes an der Dose versehen ist.

5. Verbindungsdose nach Anspruch 4, **dadurch gekennzeichnet, dass** der Montagering (32, 42) bezüglich des Kragens (21) drehbar ist.

6. Verbindungsdose nach einem der Ansprüche 1 - 5, **dadurch gekennzeichnet, dass** die umgebende Wand (12) ein bis vier Anpassungselemente (15) enthält, mit denen jeweils entweder ein Rohrstutzen (16) oder ein Kupplungsglied (9) angebracht werden kann, um zwei Dosen zusammenzukoppeln.

7. Verbindungsdose nach einem der Ansprüche 1 - 6, **dadurch gekennzeichnet, dass** die Unterseite und die Öffnung (13) geometrisch allgemein in Form eines Rechtecks konfiguriert sind, dessen beiden einander gegenüberliegenden Seiten halbkreisförmig sind.

8. Verbindungsdose nach einem der Ansprüche 1 - 7, **dadurch gekennzeichnet, dass** der Kragen (21) allgemein in Form eines geraden Kreiszylinders vorliegt.

9. Verbindungsdose nach einem der Ansprüche 1 - 7, **dadurch gekennzeichnet, dass** der Kragen (21) allgemein die Form eines geraden Zylinders aufweist, dessen Grundfläche die geometrische Form eines Rechtecks hat, dessen beiden einander gegenüberliegenden Seiten halbkreisförmig sind.

10. Verbindungsdose nach einem der Ansprüche 2 - 9, **dadurch gekennzeichnet, dass** an der Dose mindestens zwei Kragen (21) montiert sind, wobei der Abstandsdeckel (20) dazu ausgeführt ist, eine Öffnung zwischen den beiden in der Dose (10) und der Wand (12) montierten Kragen (21) zu bedecken.

## Revendications

1. Boîtier de raccordement (10, 60) pour installations électriques, tel qu'un boîtier d'appareil ou un boîtier d'accouplement, le boîtier comprenant un fond (11) et une paroi d'enceinte perpendiculaire (12) qui est fixée solidement audit fond et qui comporte un bord libre (14, 143, 144), ladite paroi (12) étant reliée à au moins un raccord de tuyau (16, 34) auquel peut être connecté un conduit de raccordement (17) pour recevoir des conducteurs électriques (18), et le boîtier de raccordement (10) comportant une ouverture (13) définie par ladite paroi (12) au niveau dudit bord libre (14, 143, 144), **caractérisé en ce que** l'ouverture peut être fermée en partie à l'aide d'un couvercle (20) et **en ce que** le couvercle est connecté à un collier (21) qui comporte une ouverture qui peut être détachée du boîtier de raccordement, un bord du collier étant espacé du bord libre (14) du boîtier de raccordement tandis que l'autre bord du collier (21) se raccorde au bord libre (14) du boîtier de raccordement.

2. Boîtier de raccordement selon la revendication 1, **caractérisé en ce que** le couvercle est configuré sous forme de couvercle d'espacement (20) qui est connecté fermement au collier (21).

3. Boîtier de raccordement selon la revendication 2, **caractérisé en ce que** le couvercle d'espacement (20) est conçu pour recouvrir une partie ou la totalité de l'ouverture entre le bord libre (14) et le collier (21).

4. Boîtier de raccordement selon l'une quelconque des revendications 1 à 3, **caractérisé en ce que** le collier (21) comporte une bague de montage positionnée à l'intérieur (32, 42), pourvue de vis de montage (33) pour attacher un insert sélectionné au boîtier.

5. Boîtier de raccordement selon la revendication 4, **caractérisé en ce que** la bague de montage (32, 42) peut tourner par rapport au collier (21).

6. Boîtier de raccordement selon l'une quelconque des revendications 1 à 5, **caractérisé en ce que** la paroi d'enceinte (12) comporte une à quatre adaptations (15), à chacune d'entre elles pouvant être connecté soit un raccord de tuyau (16) soit un élément d'accouplement (9) pour joindre deux boîtier l'un à l'autre.

7. Boîtier de raccordement selon l'une quelconque des revendications 1 à 6, **caractérisé en ce que** la surface du fond et l'ouverture (13) sont configurées sous forme géométrique généralement en forme de rectangle dont deux côtés opposés ont une forme semi-circulaire.

8. Boîtier de raccordement selon l'une quelconque des revendications 1 à 7, **caractérisé en ce que** le collier (21) a généralement la forme d'un cylindre droit circulaire.

9. Boîtier de raccordement selon l'une quelconque des revendications 1 à 7, **caractérisé en ce que** le collier (21) a généralement la forme d'un cylindre droit dont la surface de base a la forme géométrique d'un rectangle dont deux côtés mutuellement opposés ont une forme semi-circulaire.

10. Boîtier de raccordement selon l'une quelconque des revendications 2 à 9, **caractérisé en ce qu'**au moins deux colliers (21) sont montés sur le boîtier, le couvercle d'espacement (20) étant conçu pour recouvrir complètement une ouverture entre les deux colliers (21) montés dans le boîtier (10) et la paroi (12).
